(19) Europäisches Patentamt

European Patent Office

Office européen des brevets

(11) Veröffentlichungsnummer: **0 311 933 B1**

(12) **EUROPÄISCHE PATENTSCHRIFT**

(45) Veröffentlichungstag der Patentschrift: **04.12.91**

(21) Anmeldenummer: **88116720.9**

(22) Anmeldetag: **08.10.88**

(51) Int. Cl.⁵: **A23G 1/24, A23G 1/22**

(54) **Rütteltisch für mit Schokoladenmasse gefüllte Giessformen.**

(30) Priorität: **13.10.87 DE 3734626**

(43) Veröffentlichungstag der Anmeldung:
**19.04.89 Patentblatt 89/16**

(45) Bekanntmachung des Hinweises auf die
Patenterteilung:
**04.12.91 Patentblatt 91/49**

(84) Benannte Vertragsstaaten:
**AT BE CH DE ES FR GB GR IT LI LU NL SE**

(56) Entgegenhaltungen:
**DE-C- 243 722**
**DE-C- 631 592**
**GB-A- 725 593**
**US-A- 1 778 001**
**US-A- 3 778 018**

(73) Patentinhaber: **Gebr. Bindler Maschinenfabrik
GmbH & Co. KG
Kölner Strasse 102-106
W-5275 Bergneustadt/Rhld.1(DE)**

(72) Erfinder: **Bindler, Uwe
Wilhelmstrasse 47
W-5275 Bergneustadt(DE)**

(74) Vertreter: **Cohausz & Florack Patentanwälte
Postfach 14 01 61 Schumannstrasse 97
W-4000 Düsseldorf 1(DE)**

## Beschreibung

Die Erfindung bezieht sich auf eine Vorrichtung zum Rütteln von mit zähflüssiger Schokoladenmasse gefüllten Gießformen, die über einen mit Rüttelelementen bestückten Rütteltisch flachliegend transportierbar und dabei von den auf ihren Boden einwirkenden Rüttelelementen gerüttelt werden.

Eine solche Vorrichtung ist Teil einer Anlage zum Herstellen von Schokoladenprodukten. Die heute überwiegend aus Kunststoff bestehenden Gießformen sind mit den Negativeindrücken der abzufüllenden Produkte, zum Beispiel Schokoladentafeln, versehen. In der Anlage durchwandern die Formen die Phasen DOSIEREN (ABFÜLLEN) - RÜTTELN - KÜHLEN - AUSFORMEN - ANWÄRMEN. Die in neueren Anlagen benutzten Gießformen haben eine Breite von über 1 m. An ihrer Unterseite sind sie eben ausgeführt, so daß sie eine plane Auflage auf dem Rütteltisch haben.

In der Praxis wurde festgestellt, daß die in die Gießformen gefüllte Schokoladenmasse zwar durch die symmetrisch in bezug auf die Mittelachse der Transportbahn angeordneten, auf den Boden der Gießform einwirkenden Rüttelelemente verteilt wird, doch ergab sich eine schräge Oberfläche. Diese sich bei Schokoladentafeln in einer unterschiedlichen Dicke auswirkende Ungleichmäßigkeit ist unerwünscht.

Der Erfindung liegt die Aufgabe zugrunde, eine Vorrichtung der eingangs genannten Art hinsichtlich der gleichmäßigen Verteilung der Schokoladenmasse in den Gießformen zu verbessern.

Diese Aufgabe wird erfindungsgemäß dadurch gelöst, daß längs und symmetrisch zur Mittelachse der Transportbahn innere und äußere Rüttelelemente sich erstrecken, von denen die äußeren Rüttelelemente auf den Boden jeder Gießform nur im in Förderrichtung mittleren Bereich und die inneren Rüttelelemente auf den Boden jeder Gießform auf den in Förderrichtung vorderen und hinteren Rand einwirken oder umgekehrt.

Mit der Erfindung wird erreicht, daß sich über die gesamte Ebene der Form eine gleichmäßige Rüttelbewegung ergibt und es nicht, wie beim Stand der Technik, zu einer Schaukelbewegung um die senkrecht zur Transportrichtung liegende Mittelachse der Formen kommt. Auf diese Art und Weise ist gewährleistet, daß sich die Schokoladenmasse mit gleichmäßiger Dicke über die Form verteilt.

Eine konstruktiv einfache Ausgestaltung der Erfindung besteht darin, daß die Rüttelelemente als sich in Förderrichtung erstreckende Balken ausgebildet sind und die Gießformen auf ihrer Unterseite am in Förderrichtung vorderen und hinteren Rand und dazwischen Stege aufweisen, von denen die Stege des vorderen und hinteren Randes im Wirkungsbereich der Rüttelelemente auf den mittleren Steg Aussparungen aufweisen.

Vorzugsweise sind die Rüttelbewegungen der äußeren und/oder inneren Rüttelelemente in ihrer Frequenz und/oder Amplitude unterschiedlich, insbesondere einstellbar.

Im folgenden wird die Erfindung anhand einer ein Ausführungsbeispiel darstellenden Zeichnung näher erläutert. Im einzelnen zeigen:

Fig. 1    einen Rütteltisch mit zwei Gießformen in schematischer Darstellung in Aufsicht,

Fig. 2    eine Gießform in isometrischer Darstellung und

Fig. 3    die Gießform gem. Fig.2 in zwei Halbschnitten gemäß den Linien A - A und B - B der Figur 2.

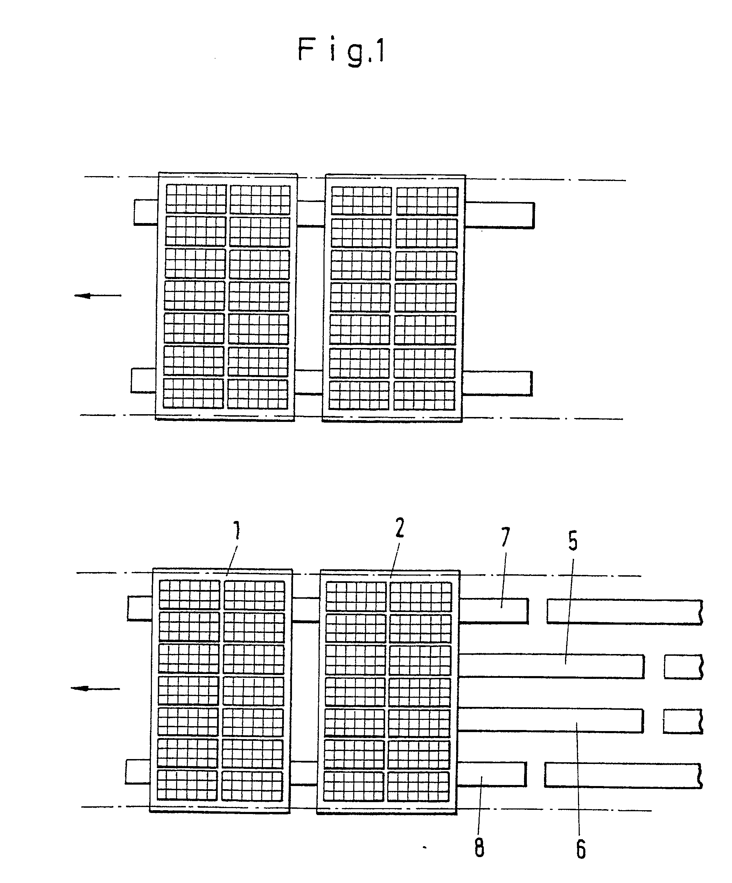

Der in Figur 1 dargestellte Rütteltisch ist Teil einer Fertigungsstraße einer Anlage zum Herstellen von Schokoladenartikeln, wie Schokoladentafeln. Über den Rütteltisch werden Gießformen 1,2 flachliegend transportiert. Diese Gießformen 1,2 sind an Transportketten 3,4 angekuppelt. Im Ausführungsbeispiel ist jede Gießform 1,2 für die Formung von 12 Schokoladentafeln ausgebildet. Der Rütteltisch weist sich in Transportrichtung erstreckende, symmetrisch zu beiden Seiten der Mittelachse der Transportbahn angeordnete innere und äußere Rüttelelemente 5,6,7,8 in Form von Balken auf. Diese Rüttelelemente 5,6,7,8 sind so angeordnet, daß sie mit dem Boden der Gießformen 3,4 Kontakt haben. Sie sind in der Höhe einstellbar. Die Amplitude der Frequenz der Rüttelbewegung der inneren und äußeren Rüttelelemente 5,6,7,8 ist vorzugsweise unterschiedlich und einstellbar.

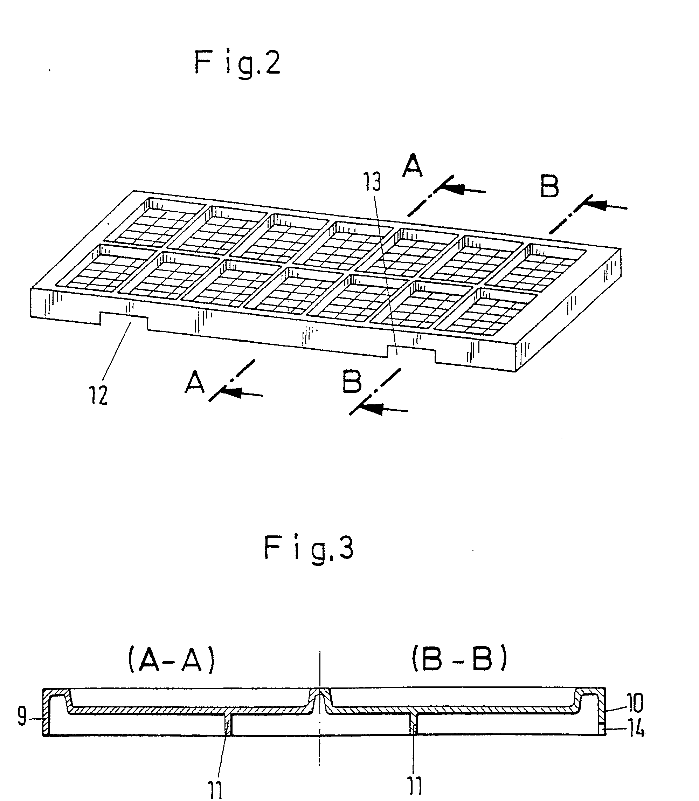

Wie die Figuren 2 und 3 zeigen, handelt es sich bei der Gießform um eine Kunststofform. Bei dieser Kunststofform können die Rüttelelemente 5,6,7,8 mit den in einer Ebene angeordneten, von dem in Transportrichtung vordern und hinteren Rand der Gießform 1,2 gebildeten Stegen 9,10 und dem dazwischenliegenden mittleren Steg 11 in Berührung kommen. Durch in den Stegen 9,10 des vorderen und hinteren Randes im Bereich der äußeren Rüttelelemente vorgesehene Aussparungen 12,13,14 wird erreicht, daß die äußeren Rüttelelemente 7,8 nur am mittleren Steg 11 angreifen können. Durch eine entsprechende Aussparung des mittleren Steges 11 im Bereich der inneren Rüttelelemente 5,6 läßt sich auch dieser Bereich von der Rüttelbewegung der inneren Rüttelelemente 5,6 entkoppeln. Anstelle der im Ausführungsbeispiel dargestellten Anordnung der Aussparungen im Bereich der äußeren Rüttelelemente können die Aussparungen auch umgekehrt angeordnet, das heißt den inneren Rüttelelementen 5,6 zugeordnet sein.

## Patentansprüche

1. Vorrichtung zum Rütteln von mit zähflüssiger Schokoladenmasse gefüllten, flachen Gießformen, die über einen mit Rüttelelementen bestückten Rütteltisch flachliegend transportierbar und dabei von den auf ihren Boden einwirkenden Rüttelelementen gerüttelt werden, **dadurch gekennzeichnet,** daß längs und symmetrisch zur Mittelachse der Transportbahn innere und äußere Rüttelelemente (5 bis 8) sich erstrecken, von denen die äußeren Rüttelelemente (7,8) auf den Boden jeder Gießform (1,2) nur im in Förderrichtung mittleren Bereich und die inneren Rüttelelemente (5,6) auf den Boden jeder Gießform (1,2) auf den in Förderrichtung vorderen und hinteren Rand einwirken oder umgekehrt.

2. Vorrichtung nach Anspruch 1, **dadurch gekennzeichnet,** daß die Rüttelelemente (5 bis 8) als sich in Förderrichtung erstreckende Balken ausgebildet sind und die Gießformen (1,2) auf ihrer Unterseite am in Förderrichtung vordern und hinteren Rand und dazwischen Stege (9 bis 11) aufweisen, von denen die Stege (9,10) des vorderen und hinteren Randes im Wirkungsbereich der Balken auf den mittleren Steg (11) Aussparungen (12 bis 14) aufweisen.

3. Vorrichtung nach Anspruch 1, **dadurch gekennzeichnet,** daß die Rüttelbewegung der äußeren und/oder inneren Rüttelelemente (5 bis 8) in ihrer Frequenz und/oder Amplitude unterschiedlich sind.

4. Vorrichtung nach einem der Ansprüche 1 bis 3, **dadurch gekennzeichnet,** daß die Rüttelbewegung der äußeren und/oder inneren Rüttelelemente (5 bis 8) in ihrer Frequenz und/oder Amplitude einstellbar sind.

**Claims**

1. A device for jolting flat moulds which are filled with viscous chocolate mass and can be coveyed lying flat over a jolting table equipped with jolting elements while being jolted by the jolting elements acting on the mould bases, characterized in that extending longitudinally and symmetrically of the central axis of the conveying path are inner and outer jolting elements (5 to 8), of which the outer jolting elements (7, 8) act on the base of each mould (1, 2) solely in the central zone in the conveying direction, while the inner jolting elements (5, 6) act on the base of each mould (1, 2) at the front and rear edge in the conveying direction, or vice versa.

2. A device according to claim 1, characterized in that the jolting elements (5 to 8) take the form of beams extending in the conveying direction and the moulds (1, 2) have on their underside at the front and rear edge and therebetween webs (9 to 11), of which the webs (9, 10) of the front and rear edge are formed with recesses (12 to 14) in the zone in which the beams act on the central web (11).

3. A device according to claim 1, characterized in that the jolting movements of the outer and/or inner jolting elements (5 to 8) have a different frequency and/or amplitude.

4. A device according to one of claims 1 to 3, characterized in that the frequency and/or amplitude of the jolting movements of the outer and/or inner jolting elements (5 to 8) can be adjusted.

**Revendications**

1. Dispositif pour vibrer des moules à fondre remplis d'une masse de chocolat visqueux qui peuvent être transportés à plat sur une table vibrante équipée d' éléments vibrants et y sont vibrés par les éléments vibrants agissant sur leur fond, caractérisé en ce que les éléments vibrants intérieurs ou extérieurs (5 à 8) s'étendent le long de, et symétriquement par rapport à, l'axe médian de la trajectoire de transport, parmi lesquels les éléments vibrants extérieurs (7,8) agissent sur le fond de chaque moule à fondre (1,2) seulement dans la zone médiane en direction de transport et les éléments vibrants intérieurs (5,6) sur le fond de chaque moule à fondre (1,2) aux bords antérieur et postérieur en direction de transport, ou inversement.

2. Dispositif selon la revendication 1, caractérisé en ce que les éléments vibrants (5 à 8) sont réalisés sous forme de poutres s'étendant en direction de transport et les moules à couler (1,2) présentent sur leur face inférieure des arêtes (9 à 11) sur les bords antérieur et postérieur en direction de transport et entre eux, parmi lesquelles les arêtes (9,10) des bords antérieur et postérieur présentent des évidements (12 à 14) dans la région des poutres sur l'arête médiane (11).

3. Dispositif selon l'une des revendication 1, caractérisé en ce que le déplacement de vibration des éléments vibrants (5 à 8) intérieurs et/ou extérieurs est différent en fréquence et/ou en amplitude.

4. Dispositif selon l'une des revendications 1 à 3, caractérisé en ce que le déplacement de vibration des éléments vibrants (5 à 8) intérieurs et/ou extérieurs est réglable en fréquence et/ou en amplitude.

# F i g.1

## Fig.2

## Fig.3

(A-A)    (B-B)